# EUROPÄISCHE PATENTSCHRIFT

(11) **EP 3 509 836 B1**
(45) Veröffentlichungstag und Bekanntmachung des Hinweises auf die Patenterteilung: **26.08.2020**
(21) Anmeldenummer: 17765148.6
(22) Anmeldetag: 06.09.2017
(51) Int. Cl.: B32B 5/02, B32B 9/00, B32B 9/04, B32B 17/00, B32B 27/08, B32B 27/12, B32B 3/26

(54) **ECHTSTEINFURNIER**
REAL STONE VENEER
FEUILLE DE PIERRE NATURELLE

(30) Priorität: 07.09.2016 DE 102016217032
(43) Veröffentlichungstag der Anmeldung: 17.07.2019
(73) Patentinhaber: Ilhan, Elmar, 73434 Aalen (DE); Hornung, Markus, 76297 Stutensee (DE); Krahl, Rolf, 71679 Asperg (DE); Gwinner, Dieter, 73550 Waldstetten (DE)
(72) Erfinder: ILHAN, Elmar, 73529 Schwäbisch Gmünd (DE); HORNUNG, Markus, 73529 Schwäbisch Gmünd (DE); KRAHL, Rolf, 73529 Schwäbisch Gmünd (DE); GWINNER, Dieter, 73529 Schwäbisch Gmünd (DE)
(74) Vertreter: dompatent von Kreisler Selting Werner - Partnerschaft von Patent- und Rechtsanwälten mbB
(86) Internationale Anmeldenummer: PCT/EP2017/072319
(87) Internationale Veröffentlichungsnummer: WO 2018/046528

(56) Entgegenhaltungen:
- DE-A1-102006 037 532
- DE-A1-102014 227 010
- DE-U1-202016 104 592
- FR-A1- 2 426 032
- JP-A- S61 122 176
- KR-A- 20100 028 697
- US-A1- 2007 110 924

## Beschreibung

Gegenstand der Erfindung ist ein beschichtetes Echtsteinfurnier, ein Verfahren zu seiner Herstellung sowie dessen Verwendung.

KR 1020100028697 A beschreibt Schiefermaterial mit einem Grundlack und einem metallhaltigen Decklack. Die Folgerungen sind, dass sich weder Strukturerhaltung des Schiefers noch reines Metall als Endoberfläche damit verwirklichen lässt.

DE 630645 A betrifft metallische Farben auf Schiefer, Beton und Ähnlichem. Ein Sol aus Fe-Hydroxid oder Cr-Hydroxid wird mittels Elektrolyten in ein Gel umgewandelt und dann getrocknet. Wieviel vom Gel oder Binder nach Temperaturbehandlung noch übrig bleibt, ist nicht ersichtlich. Es wird angenommen, dass noch nichtmetallisches Bindemittel vorhanden ist, da ansonsten die Farbeinstellung durch Zugabe von Metalloxiden zum Sol nicht erfolgen könnte. Als Beispiel wird schwarzes Manganoxid im getrockneten Gel verteilt.

GB 2483231 A beschreibt eine Steinfliese, die abgeschliffen und grundlackiert wird, das heißt, dass die Struktur der Oberfläche unmaßgeblich ist. Anschließend wird eine metallhaltige "Lösung" ("metal product") aufgesprüht - evtl. mehrfach, um die gewünschte Dicke zu erzeugen. Nach Trocknung legt der nächste Schleif- oder Poliervorgang die Metallschicht frei; d.h. er soll vermutlich das an der Oberfläche befindliche "Dach" aus Lack abtragen. Folgerung: mehr oder weniger reine Metalloberfläche des Gesamtaufbaus, der dem Substrat eine neue Oberflächenstruktur verleiht.

JP 000S62133060 A1 beschreibt ein thermisches Aufsprühen einer metallhaltigen synthetischen Harzschicht.

JP 000S63162768 A1 betrifft eine Schutzbeschichtung durch EmulsionsPolymerisation von speziellen Monomeren, um Beständigkeit gegen Korrosion, Wasser und Lösemittel zu erzeugen.

JP H02-217379 A betrifft eine "Metallbesprühte" Schieferfliese, die mit einer thermisch gehärteten Schutzschicht versehen ist, um die Langzeitstabilität des optischen Erscheinungsbilds zu erhöhen.

Reine Metalloberfläche und Strukturerhaltung spielen bei dieser Schrift-Entwicklung keine Rolle.

DE 2705683 A1 betrifft das Aufbringen eines metallhaltigen Lacks auf ein Substrat (unter anderem auch auf Schiefer), anschließendes Entfernen des filmbildenden Materials und dadurch Freilegen der Metallbestandteile an der Außenfläche, das heißt die Erzeugung einer ebenen Metalloberfläche ohne Abbildung der tragenden Struktur.

Demgegenüber besteht die Aufgabe der vorliegenden Erfindung darin, die strukturierte Oberfläche von Echtsteinfurnier mit einer dünnen, mechanisch stabilen Metallschicht zu versehen, die das dreidimensionale Erscheinungsbild beibehält.

Die vorgenannte Aufgabe wird in einer ersten Ausführungsform gelöst durch ein Echtsteinfurnier, umfassend eine Steinschicht und eine Trägerschicht, das dadurch gekennzeichnet ist, dass die freiliegende Steinoberfläche eine Metallschicht einer Dicke im Bereich von 0,05 µm bis 0,5 µm aufweist.

Die charakteristischen Merkmale dieses neuen dekorativen Produkts sind die nur aus (Edel-) Metall bestehende Schicht und die originalgetreue Beibehaltung der Struktur der beschichteten Steinoberfläche.

Nach der Beschichtung ist sowohl das Profil der Oberfläche mit ihren Stufen, Kanten, Furchen und so weiter als auch ihre Feinstruktur mit unterschiedlichen Rauhigkeiten, die sich als matte, glänzende und spiegelnde Flächenbereiche abbilden, genauso zu erkennen wie vorher. Das bedeutet anderes ausgedrückt, dass insbesondere unter Anwendung eines vakuumgestützten Beschichtungsverfahrens keine Einebnung der dreidimensionalen Oberflächenstrukturen stattfindet.

Demgegenüber geht das Unkenntlichmachen der Topographie durch Auffüllen der Täler, wie im Stand der Technik beschrieben, mit dem Auftragen von metallhaltigen Lacken einher. Während man bei der erfindungsgemäßen Metallisierung, insbesondere durch Vakuumbeschichtung Schichtdicken im Bereich von etwa 0,05 µm bis 0,5 µm, insbesondere 0,1 µm bis 0,3 µm herstellt, sind Lack- oder lackähnliche Schichten des Standes der Technik von 50 µm schon als dünn zu bezeichnen. Der typische Dickenbereich reicht eher von 100 µm bis 200 µm.

Noch weiter entfernen sich die im Stand der Technik dargestellten Endoberflächen vom ursprünglichen Erscheinungsbild des Substrats, wenn man zunächst Grundierungen oder Primer ("undercoats"), beispielsweise Haftvermittler, aufbringt oder als vorausgehende Maßnahme eine mechanische Behandlung wie Schleifen oder Schmirgeln ("sanding") durchführt.

Echtsteinfurnier als solches ist im Stand der Technik bereits bekannt und in vielen Erscheinungsformen erhältlich. Üblicherweise handelt es sich dabei um eine dünne Lage aus Naturstein, die mit einer rückseitigen Trägerschicht verbunden ist, die dem Material insgesamt Flexibilität und Bruchsicherheit verleiht. Somit ist es möglich, Echtsteinfurnier auch in Rollenform zu transportieren.

Üblicherweise hat Echtsteinfurnier eine Schichtstärke von insgesamt 0,5 bis 5 mm, insbesondere 1 bis 2,5 mm. Die Schichtdicke der Metallisierung im Bereich von µm ist dabei vernachlässigbar klein. Die Standformate können 1 m² umfassen, wobei jedoch auch Echtsteinfurnier in Formaten von mehr als 2 m Länge im Handel erhältlich sind. Das Echtsteinfurnier umfasst somit 100 % natürliche Steinoberfläche. Es ist formstabil, wasserfest und frostsicher.

Der wesentliche Vorteil bei diesem Natursteinprodukt liegt in der dünnen Materialstärke, die die gleichen Oberflächeneigenschaften, wie der Naturstein an sich hat, dabei aber wesentlich leichter und flexibler ist.

Besonders bevorzugt im Sinne der vorliegenden Erfindung umfasst das Echtsteinfurnier eine Schicht aus Naturschiefer, die im Stand der Technik gelegentlich auch als Dünnschiefer angeboten wird. Polierte Steinoberflächen sind erfindungsgemäß weniger geeignet, da die Topographie vor und nach der Metallisierung nicht mehr erkennbar ist.

Bekanntermaßen hat Schiefer eine besonders ausgeprägte Oberflächenstruktur, die erfindungsgemäß auch durch die Metallschicht erhalten bleiben soll. Insbesondere die Haptik und die Optik sollen erfindungsgemäß bei dem Echtsteinfurnier, insbesondere dem Dünnschiefer erhalten bleiben. Daher ist es erforderlich, dass die Metallschicht besonders dünn ausgeprägt ist, was im Stand der Technik bei der Anwendung von Lackierverfahren nicht gewährleistet wird.

Im Stand der Technik sind bereits Steinfurniere erhältlich, die rückseitig mit einer Trägerschicht versehen sind. Beispielsweise ist es möglich, diese Trägerschicht auf der Basis einer oder mehrerer gegebenenfalls verstärkter Harzschicht(en) herzustellen. Besonders bevorzugt im Sinne der vorliegenden Erfindung werden hierzu Harzschichten eingesetzt, die Naturfasern oder synthetische Fasern, insbesondere Baumwolle oder Glas umfassen.

Außerdem sind Trägerschichten aus Textilgewebe für Furniere im Einsatz. Die Gesamtdicken liegen hier im Bereich von 0,3 bis 0,8 mm.

Mit dem erfindungsgemäßen Material erschließen sich dem Handwerker beziehungsweise Bauherrn vielseitige Möglichkeiten. Echtsteinfurnier, insbesondere Dünnschiefer, ist in Haptik und Optik von einer massiven Steinplatte nicht zu unterscheiden.

Die natürliche Stabilität der Metallschicht bestimmt deren Qualität auf der Echtsteinfurnieroberfläche. Hierbei ist es im Sinne der vorliegenden Erfindung besonders bevorzugt, dass diese Metallschicht zu 100 % flächendeckend auf das Echtsteinfurnier aufgebracht wird. Grundsätzlich können alle für die Erzeugung von dekorativen Oberflächen geeignete Metalle und Metalllegierungen, insbesondere Edelmetalle, auf die Oberfläche des Echtsteinfurniers aufgebracht werden.

Besonders bevorzugt im Sinne der vorliegenden Erfindung wird in einer weiteren Ausführungsform das Steinfurnier durch Vakuumbeschichtung metallisiert. Hierdurch wird gewährleistet, dass die Schichtdicke außerordentlich dünn ausgeprägt wird, so dass die Beschichtung gut auf dem Furnier haftet. Von besonderer Bedeutung ist im Sinne der vorliegenden Erfindung, dass die Metallschicht vorzugsweise direkt auf der Steinoberfläche angebracht wird, da Primer oder andere Haftgrundierungen aus Lacken zu einer Veränderung der strukturellen und optischen Oberflächeneigenschaften führen.

In einer weiteren Ausführungsform der vorliegenden Erfindung wird das mit der Metallschicht versehene Echtsteinfurnier als Dekoroberfläche eingesetzt.

Besonders bevorzugt im Sinne der vorliegenden Erfindung werden die dekorativen Flächen zur Herstellung von Fassadenflächen, Wandflächen, Bodenflächen, Möbeloberflächen und Kraftfahrzeuginnenverkleidungen eingesetzt. Dabei geht das metallisierte Echtsteinfurnier in einen mehrlagigen Verbund ein, bei dem eine transparente Glas- oder Kunststoffplatte auf die metallisierte Sichtseite auflaminiert wird. Dieses Laminat wird auf das zu veredelnde Objekt montiert.

In einer weiteren Ausführungsform wird das metallisierte Echtsteinfurnier hinter einer transparenten Kunststoff- oder Glasplatte auf dem zu veredelnden Objekt montiert.

In einer weiteren Ausführungsform wird das metallisierte Echtsteinfurnier ohne davorliegende Glas- oder Kunststoffscheiben auf das zu veredelnde Objekt montiert.

## Patentansprüche

1. Echtsteinfurnier umfassend eine Steinschicht auf einer Trägerschicht, **dadurch gekennzeichnet, dass** die freiliegende Steinoberfläche eine Metallschicht einer Dicke im Bereich von 0,05 µm bis 0,5 µm und die Steinschicht zusammen mit dem Träger eine Dicke im Bereich von 0,3 bis 5 mm aufweist.

2. Echtsteinfurnier nach Anspruch 1, **dadurch gekennzeichnet, dass** die Metallschicht eine Dicke im Bereich von 0,1 µm bis 0,5 µm aufweist.

3. Echtsteinfurnier nach Anspruch 1 oder 2, **dadurch gekennzeichnet, dass** die Steinschicht Naturschiefer umfasst.

4. Echtsteinfurnier nach einem der Ansprüche 1 bis 3, **dadurch gekennzeichnet, dass** die Trägerschicht eine oder mehrere gegebenenfalls faserverstärkte Harzschicht(en) umfasst und die Fasern natürliche Fasern oder synthetische Fasern, insbesondere Baumwolle oder Glas umfassen.

5. Echtsteinfurnier nach einem der Ansprüche 1 bis 3, **dadurch gekennzeichnet, dass** die Steinschicht mit einem Träger aus Textilgewebe, insbesondere aus Baumwolle, verleimt ist.

6. Echtsteinfurnier nach einem der Ansprüche 1 bis 5, **dadurch gekennzeichnet, dass** die Metallschicht ein oder mehrere Metalle oder Metalllegierungen umfasst.

7. Echtsteinfurnier nach einem der Ansprüche 1 bis 6, **dadurch gekennzeichnet, dass** die Metallschicht ein oder mehrere Edelmetalle oder edelmetallhaltige Legierungen umfasst.

8. Verfahren zur Herstellung von Echtsteinfurnier nach einem der Ansprüche 1 bis 7, **dadurch gekennzeichnet, dass** man die Steinoberfläche durch physikalische Dampfphasenabscheidung, vakuumgestützte Beschichtung und/oder Vakuumbeschichtung metallisiert.

9. Verwendung von Echtsteinfurnier nach einem der Ansprüche 1 bis 8 zur Herstellung von Dekoroberflächen.

10. Verwendung nach Anspruch 9 zur Herstellung von Fassadenflächen, Wandflächen, Bodenflächen, Möbeloberflächen und Kraftfahrzeuginnenverkleidungen.

11. Verwendung nach Anspruch 9 oder 10, **dadurch gekennzeichnet, dass** das metallisierte Echtsteinfurnier Teil eines Verbundes ist, bei dem eine transparente Glas- oder Kunststoffplatte auf die metallisierte Sichtseite und gegebenenfalls eine transparente oder opake Glas- oder Kunststoffplatte auf die Rückseite, d.h. auf den Träger, laminiert wird, wobei dieses Laminat auf das zu veredelnde Objekt montiert wird.

12. Verwendung nach einem der Ansprüche 9 bis 11, **dadurch gekennzeichnet, dass** das metallisierte Echtsteinfurnier Teil eines Verbundes ist, bei dem eine transparente Glas- oder Kunststoffplatte auf die metallisierte Sichtseite laminiert wird, wobei dieses Laminat auf das zu veredelnde Objekt montiert wird.

13. Verwendung nach einem der Ansprüche 9 bis 12, **dadurch gekennzeichnet, dass** man das metallisierte Echtsteinfurnier hinter einer transparenten Kunststoff- oder Glasplatte auf einem zu veredelnden Objekt montiert

14. Verwendung nach einem der Ansprüche 9 bis 13, **dadurch gekennzeichnet, dass** man das metallisierte Echtsteinfurnier auf einem zu veredelnden Objekt montiert.

## Claims

1. A real stone veneer comprising a stone layer on a support layer, **characterized in that** the exposed stone surface has a metal layer with a thickness within a range of from 0.05 µm to 0.5 µm, and the stone layer together with the support has a thickness within a range of from 0.3 to 5 mm.

2. The real stone veneer according to claim 1, **characterized in that** said metal layer has a thickness within a range of from 0.1 µm to 0.5 µm.

3. The real stone veneer according to claim 1 or 2, **characterized in that** said stone layer includes natural slate.

4. The real stone veneer according to any of claims 1 to 3, **characterized in that** said support layer includes one or more, optionally fiber-reinforced resin layers, and the fibers include natural fibers or synthetic fibers, especially cotton or glass.

5. The real stone veneer according to any of claims 1 to 3, **characterized in that** said stone layer is glued together with a support made of a textile fabric, especially cotton.

6. The real stone veneer according to any of claims 1 to 5, **characterized in that** said metal layer comprises one or more metals or metal alloys.

7. The real stone veneer according to any of claims 1 to 6, **characterized in that** said metal layer comprises one or more precious metals or alloys containing precious metals.

8. A process for preparing a real stone veneer according to any of claims 1 to 7, **characterized in that** said stone surface is metallized by physical vapor deposition, vacuum-assisted coating, and/or vacuum coating.

9. Use of a real stone veneer according to any of claims 1 to 8 for preparing decorative surfaces.

10. The use according to claim 9 for preparing facade surfaces, wall surfaces, floor surfaces, furniture surfaces, and motor vehicle interior trims.

11. The use according to claim 9 or 10, **characterized in that** said metallized real stone veneer is part of a composite in which a transparent glass or plastic plate is laminated to the metallized visible side, and optionally a transparent or opaque glass or plastic plate is laminated to the back side, i.e., the support, wherein such laminate is mounted onto the object to be finished.

12. The use according to any of claims 9 to 11, **characterized in that** said metallized real stone veneer is part of a composite in which a transparent glass or plastic plate is laminated to the metallized visible side, wherein such laminate is mounted onto the object to be finished.

13. The use according to any of claims 9 to 12, **characterized in that** said metallized real stone veneer is mounted on an object to be finished behind a transparent plastic or glass plate.

14. The use according to any of claims 9 to 13, **characterized in that** said metallized real stone veneer is mounted on an object to be finished.

## Revendications

1. Placage pierre véritable, comprenant une couche de pierre sur une couche de support, **caractérisé en ce que** la surface de pierre exposée présente une couche métallique ayant une épaisseur comprise entre 0,05 µm et 0,5 µm, et la couche de pierre avec le support présente une épaisseur comprise entre 0,3 et 5 mm.

2. Placage pierre véritable selon la revendication 1, **caractérisé en ce que** la couche métallique présente une épaisseur comprise entre 0,1 µm et 0,5 µm.

3. Placage pierre véritable selon la revendication 1 ou 2, **caractérisé en ce que** la couche de pierre comprend de l'ardoise naturelle.

4. Placage pierre véritable selon l'une quelconque des revendications 1 à 3, **caractérisé en ce que** la couche de support comprend une ou plusieurs couches de résine, éventuellement renforcées par des fibres, et les fibres comprennent des fibres naturelles ou des fibres synthétiques, notamment coton ou verre.

5. Placage pierre véritable selon l'une quelconque des revendications 1 à 3, **caractérisé en ce que** la couche de pierre est collée avec un support en tissu textile, notamment en coton.

6. Placage pierre véritable selon l'une quelconque des revendications 1 à 5, **caractérisé en ce que** la couche métallique comprend un ou plusieurs métaux ou alliages de métaux.

7. Placage pierre véritable selon l'une quelconque des revendications 1 à 6, **caractérisé en ce que** la couche métallique comprend un ou plusieurs métaux précieux ou alliages contenant des métaux précieux.

8. Procédé pour préparer un placage pierre véritable selon l'une quelconque des revendications 1 à 7, **caractérisé en ce que** la surface de pierre est métallisée par dépôt physique en phase vapeur, revêtement assisté par vide, et/ou revêtement sous vide.

9. Utilisation d'un placage pierre véritable selon l'une quelconque des revendications 1 à 8 pour préparer des surfaces décoratives.

10. Utilisation selon la revendication 9 pour préparer des surfaces de façade, des surfaces de mur, des surfaces de plancher, des surfaces de meubles, et des revêtements intérieurs d'automobiles.

11. Utilisation selon la revendication 9 ou 10, **caractérisée en ce que** ledit placage pierre véritable métallisé fait partie d'un composite, dans lequel une plaque transparente en verre ou plastique est laminée sur le côté visible métallisé, et éventuellement une plaque transparente ou opaque en verre ou plastique est laminée sur le côté arrière, c'est-à-dire sur le support, dans laquelle le stratifié obtenu est monté sur l'objet à améliorer.

12. Utilisation selon l'une quelconque des revendications 9 à 11, **caractérisée en ce que** ledit placage pierre véritable métallisé fait partie d'un composite, dans lequel une plaque transparente en verre ou plastique est laminée sur le côté visible métallisé, dans laquelle le stratifié obtenu est monté sur l'objet à améliorer.

13. Utilisation selon l'une quelconque des revendications 9 à 12, **caractérisée en ce que** ledit placage pierre véritable métallisé est monté sur un objet à améliorer derrière une plaque transparente en plastique ou verre.

14. Utilisation selon l'une quelconque des revendications 9 à 13, **caractérisée en ce que** ledit placage pierre véritable métallisé est monté sur un objet à améliorer.
